# EUROPEAN PATENT SPECIFICATION

(11) **EP 1 908 805 B1**
(45) Date of publication and mention of the grant of the patent: **22.02.2012**
(21) Application number: 06757962.3
(22) Date of filing: 22.05.2006
(51) Int. Cl.: C09D 5/08, C09D 127/08, C09D 175/08, C09D 5/10, B32B 15/08

(54) **COMPOSITION FOR A HEAT-RESISTANT ANTICORROSION COATING**
ZUSAMMENSETZUNG FÜR EINE HITZEBESTÄNDIGE KORROSIONSSCHUTZSCHICHT
COMPOSITION POUR REVETEMENT ANTICORROSION THERMOSTABLE

(30) Priority: 23.05.2005 RU 2005115342
(43) Date of publication of application: 09.04.2008
(73) Proprietor: Closed Joint-Stock Company "EKA", Moskovskaya obl., 141090 (RU); FGU "FAPRID", Moscow, 109028 (RU)
(72) Inventor: RAKOCH, Alexander Grigorievich, Moscow, 121596 (RU); BAUTIN, Vasily Anatolievich, Moscow, 121069 (RU); RIZHOV, Evgeny Vasiljevich, Moskovskaya obl., 141090 (RU); GANIN, Sergej Ivanovich, Moskovskaya obl., 141006 (RU)
(74) Representative: Jeck, Anton
(86) International application number: PCT/RU2006/000255
(87) International publication number: WO 2006/126916

(56) References cited:
- DD-A1- 88 151
- DE-A1- 3 232 755
- FR-A1- 2 403 835
- GB-A- 1 232 162
- SU-A- 450 822
- SU-A- 763 002
- US-A- 2004 198 900
- 'Syre i poluprodukty dlya lakokrasochnykh materialov', 1978, KHYMIYA, MOSCOW page 314

## Description

### Field of the invention

The invention relates to the compositions used for anticorrosion coatings in various industrial fields.

### Background of the invention

In various areas of science and technology creation of coatings providing reliable protection of various constructions from environmental effects and working media including heat, corrosion-aggressive vapors and liquids leading to deterioration of operating characteristics of the constructions is a very important task.

While in service, the resource of the elements of metal constructions is consumed as a result of effects of the following processes: time-lagged fragile cracking fissuring, corrosion cracking, electrochemical corrosion, ageing, creep, in which case the most significant processes are cracking processes. At a high pollution of the atmosphere without special measures of protection against corrosion the majority of metal members and structures lose up to 50% of their functional properties within 2 to 3 years.

Now a considerable quantity of various coatings differing essentially by their mechanical characteristics and chemical composition, conditions and modes of their operation, for example, used for application onto a surface of members to be protected, as well as differing by cost, durability and a number of other parameters have been developed.

Known in the art is a composition for an anticorrosion coating, including a copolymer of distillation residues of rectification of styrene modified by polyisobutylene with anhydrides of acids, dibutyl phthalate, aluminum bronze and xylene (SU, 897818, A1). This composition is applied by a brush, a roll or by means of a spray gun on a preliminarily prepared surface in 2-4 layers. The time of drying of one layer is 30-40 minutes at a temperature of 20°C. The composition can be used for protection of steel pipes used in various branches of the national economy. However, due to steaming under high pressure and temperature, which is carried out for purification of fuel tanks and reservoirs before filling them with a new content, the coating becomes unstable and loses its protective properties. Besides, the composition containing xylene, styrene with anhydrides and dibutyl phthalate releases poison gases.

Also known in the art is a composition for an anticorrosion coating base on a binder consisting of alkid-styrene resin or a lean alkyd resin in an amount of 11.0-44.0 percent by weight. The composition includes an antirust agent in the form of tannin or derivatives of tannin in an amount of 0.3-5.0 percent by weight, pigments 3.0-24.0 percent by weight, filling agents 5.0-22.0 percent by weight, an organic solvent being the rest (RU, 2246512, C1). The composition can be used in the petroleum industry for protection of a surface of articles and constructions made of ferrous metals. The pigments consist of zinc phosphate, aluminum bronze, technical carbon, zinc tetraoxychromate, a red pigment and other constituents. The composition is applied by a brush, in bulk, and by a disperser. However the coating obtained using this composition has low thermal resistance at a temperature above 25°C and at a low stability at a temperature of minus 25°C or at temperature jumps that does not allow one to guarantee a long-term operation of such coatings on metal constructions used in regions with moderate and severe climatic conditions.

Also known in the art is a composition for an anticorrosion coating (RU, 2215763, C1), including trifluoroethylene copolymer with vinylidene fluoride as a film-forming agent, a mixture of acetone as an organic solvent, butyl acetic ether, toluene and ethyl acetate and aluminum bronze which improve adhesion of the coating to steel. The composition is applied onto a clean dry surface with a brush, a roll, a compressed-air atomizer and in bulk. However, the complex technology of application of such a coating requires sintering at an elevated temperature that is not always possible, when applying the coating on real objects, considerably limits its application. Besides, the coating has a high tendency to cracking fissuring that is inadmissible for its use under conditions of a temperature difference.

Various tightening and protective compositions based on polyurethane as a form-building compound are also known in the art.

For example, known in the art is a composition obtained by interaction of high-molecular polyester alcohol, monocolamine alkylene oxides, a pigment, a catalyst, an inorganic filler and organic polyisocyanate (US 4,605,725, A) for using it as a surface protection coating under thermal shock conditions.

Also known in the art are compositions including alkyl carbamate pre-polymer, a salt of hydroxy-acetic acid and a product of interaction of polyisocyanate with polyurethane pre-polymer which have no isocyanate functional groups (US 5,852,137, A) for protection of plastic, metals, glass-reinforced plastics or composites.

Known in the art are compositions having high resistance to hot vapors and heat, confirmed by tensile strength tests after treating articles by wet overheated steam.

For example, known in the art is a composition including polyisocyanate ingredient and high-molecular alcohol with an ozone inhibitor, in the form of a special aromatic secondary amino (US 5,990,186).

Known in the art is a bipropellant composition resistant to oxidation and resistant to the effect of hot water and air of up to plus 70°C containing polybutylene glycol alcohol or polytetramethylene oxyglycol alcohol or polytetraethylene oxyglycol alcohol as a hydrophobic polyester component and sterically bonded amine as an antioxidant, polyisocyanate as a hardener and other additives: a filling agent, a plasticizer, adhesion increasing agents, countersteering agents (US 6,855,765, B2).

Known in the art is a polyurethane bipropellant protective low-modulus composition having good elasticity and painting ability, obtained by interaction of a toluendiizotsianat/polioksialkilen high-molecular alcoholic pre-polymer component having hydroxyl end groups, a toluendiizotsianat/polioksialkilen high-molecular alcoholic promoter having isocyanate end groups, a diphenyl methane diisocyanate pre-polymer component and a diphenyl methane diisocyanate monomeric component. This composition can include additives providing stability to environmental effects, for example, sorbing ultraviolet radiation, stabilizers, fungicides and others (US 2004198900. A). However, the claimed prospective coating has a high thickness of 6 to 20 mm that considerably limits its use for protection of constructions. DE 32 32 755 A1 discloses a primed steel plate coated with an anticorrosive topcoating composition comprising aluminium bronze (5.84 %), a polyester (13.77 %), an epoxy resin (1.98 %) and a hexamethoxymethylmelamine resin (2.7 %). The average size of the metal particles is less than or equals to 5 µm.

DE 88 151 A1 discloses a meldable anticorrosive primer composition comprising 7 % aluminium bronze particles and % polyvinylbutyral.

### Disclosure of the invention

An object of the invention is to develop a composition for producing an anticorrosive heat-resistant coating having stable protective properties when working under conditions of a drastic temperature difference, both under normal atmospheric conditions and under effect of aggressive media, and convenient for application without using additional heating.

Another object of the invention is to create a composition containing a binder, having high chemical resistance, good adhesion while providing the absence of pores; an effective plasticizer impairing plasticity to the coating and an extended temperature band of its high-elasticity state, and an reinforcing substance raising the mechanical characteristics of the coating, promoting its better bond with a substrate and increasing the coating thermal conductivity.

In so doing the following parameters are selected as criteria of achieving a desirable technical result:
- provision of thermal resistance of the anticorrosion coating in the range of working temperatures ±50°C,
- provision of protective properties of the coating when treating the surfaces by steam at a temperature of 150°C under pressure of up to 6 atmospheres

The task in view was achieved by creation of a composition for a heat-resistant anticorrosion coating including the following components at their percentage ratio:

| | |
|---|---|
| polyurethane pre-polymer based on Toluene diisocyanate and diethylene glycol | - 55-35%, |
| Polytrifluorochloroethylene | - 35-55%, |
| Aluminum bronze | - 5-10%, |

In so doing the dispersity of aluminum bronze particles is not higher than 20 µm (20 microns).

In this case, the combination in the composition of polyurethane pre-polymer based on toluene diisocyanate and diethylene glycol characterized by high chemical resistance, good adhesion (not less than 1 point) and no porosity in a significant range of concentrations, as well as a high resistance to chemically aggressive media, the polytrifluorochloroethylene being an effective plasticizer imparting to the coating plasticity in a wide temperature range, as well as additional chemical resistance in organic solvents and acids, and an aluminum bronze as a reinforcing substance enhancing the adhesive properties of the composition and increasing the coating thermal conductivity, providing high technological, strength and protective properties of the coatings according to the invention.

### The best embodiment of the invention

The invention is further described by examples of tests of the composition for coatings according to the invention on samples made of low-carbon to low-alloy steel with a coating made with application of the composition according to the invention.

Before applying the corrosion resistant coating, there is performed an operation of careful mechanical agitation of the composition containing the following compounds: polyurethane pre-polymer based on toluene diisocyanate and diethylene glycol, polytrifluorochloroethylene, aluminum bronze containing in the composition in various concentrations.

The protective coating is applied on samples made in the form of plates with geometric dimensions of 50×30×5 mm made of low-carbon low-alloy steel in a simple mechanical way by a brush or a roll, the thickness of first layer making 50-70 µm (50-70 microns). Then the samples are kept on air for 22-24 hours till full polymerization. After that a second layer of the same thickness is applied in a similar way, and a similar exposure to air is performed. After applying the third layer also with a thickness of 50 - 70 µm (50-70 microns) the sample is dried on air within 96 hours.

It has been found that at a different content of polyurethane pre-polymer based on toluene diisocyanate and diethylene glycol the coating changes its technological qualities: at content in a concentration of less than 35% the coating becomes porous and the process of its application becomes non-technological; at content in concentration of more than 55% the coating loses elasticity.

It has also been found that at a concentration of polytrifluorochloroethylene higher than 55% the coating porosity drastically increases, and the process of application becomes to be technologically complicated, and at a concentration less than 35% the coating is insufficiently plastic.

At a concentration of aluminum bronze less than 5% the coating does not possess sufficient thermal conductivity and consequently, and thermal stability, at a concentration higher than 10% we have noticed a negative effect on the coating plasticity.

The aluminum bronze with dispersity higher than 20 µm (20 microns) cannot be used in this composition because of subsequent deterioration of the plastic properties of the coating. On the other hand, use of aluminum bronze with dispersity less than 5 µm (5 microns) results in a decrease of the economic efficiency of coating owing to a raised cost.

The tests were performed subjecting the samples with an applied coating in consequence with:
- contacting with a corrosion-active medium;
- heat cycling in a corrosion-active medium in a cycle: exposure 0.5 hour at 5.0±2°C, then 0.5 hour at a minus 50±2°C;
- treatment with overheated steam at a temperature of 150°C at a pressure of 6 atm.

The samples were contacted with corrosion-active media in a cell with an aggressive atmosphere which is first immersed in the Dewar vacuum flask with liquid nitrogen, and then put in the tank made of low-carbon steel filled with an aggressive medium and closed from above with a cover also made of low-carbon steel.

Besides, the coating was also applied onto the internal surface of a tank. The system was kept for 4.5 years on an open platform in the atmosphere of a big city (Moscow).

In so doing for the test of the coating samples, corrosion-active liquid media were used: petrol, ethylene glycol, methanol, gas condensate, in which the coated samples were immersed for a half of their length, the other part of the sample being above the solution, i.e. in a gas phase, for a possibility of monitoring the effect of the medium both at direct contact and an effect of its vapor, as well as under conditions of partial condensation of vapors on the sample above

boundary line of the medium phases. Besides, the corrosion was checked at the interface of the medium phases.

In so doing the state of the samples was monitored by visual supervision of their discoloration and the consistence of the corrosion medium, coating condition, and the electrolytic potential of the samples was measured for checking the presence of breaking of the through porosity of the coating.

For a temperature-cycle test the cell with samples was set in a thermostat, and after a preset temperature minus 50±2°C has been achieved, the cell with samples to a thermostat with a preset temperature plus 50±2°C, and the cycle was repeated until changes in the coating were detected.

The tests with overheated steam were effected in a steam heater, in which the sample was placed at a distance of 3 cm from the outlet of a steam jet heated to 150°C under pressure of 6 atmospheres directly onto the coating surface.

The variants of investigated samples are shown in the Table.

**Table**

| Coating composition | Quantitative content in the coating on the samples, wt. % | | | |
|---|---|---|---|---|
| | 1^{st} group | 2^{nd} group | 3^{rd} group | 4^{th} group |
| Polyurethane pre-polymer based on of toluene diisocyanate and diethylene glycol | 55 | 50 | 40 | 35 |
| Polytrifluorochloroethylene | 35 | 40 | 55 | 55 |
| Aluminum bronze with dispersity of particles 10 µm (10 microns) | 10 | 10 | 5 | 10 |

The Tests have shown, that:
(A) After an exposure in the aggressive media the surface of the plates with the coating according to the invention had no cracks, corrosion centers in the form of brown spots or points, and the aggressive liquid media remain transparent.
   After an exposure during 4.5 years the steel covers of the petrol tanks, on which the coating was not applied are corroded by rust practically by 30%. The surface of these covers also suffered from spot corrosion.
(B) The studied corrosion resistant coatings according to the invention, when treated by steaming under pressure within 24 hours, did not cracked, did not change their color and had no corrosion centers.
(C) At heat cycling in a medium of petrol, ethylene glycol, methanol, gas condensate the coatings according to the invention applied onto the surface of the plates remain continuous and preserve the protective properties after 50 cycles.

Thus, the composition according to the invention provides a coating which is thermally resistant in wide temperature range, provides protective properties at a drastic variation of temperature under atmospheric conditions and under conditions of contact with corrosion-active media.

### Industrial applicability

The composition for a thermally resistant anticorrosive coating according to the invention comprises well known components, the technology of applying the coatings is simple and applicable under conditions of industrial workshops and on open process areas, does not require high temperature and special devices. The coating can be applied both by a brush and by means of sprayers and roller devices.

The invention can be used in various fields including the oil and gas industry and mechanical engineering, shipbuilding, in particular, for protection of internal surfaces of steel fuel tanks and trunks intended for transportation of all kinds of oil products or various organic solvents.

## Claims

1. A composition for a heat resistant anticorrosive coating including the following components in their ratio in wt. %:
| | |
|---|---|
| polyurethane pre-polymer based on toluene diisocyanate and diethylene glycol | 55-35 |
| Polytrifluorochloroethylene | 35-55 |
| Aluminum bronze | 5-10 |
the dispersity of the aluminum bronze particles being not higher than 20 µm (20 microns).

## Patentansprüche

1. Zusammensetzung für eine hitzebeständige Korrosionsschutzschicht aus einem Polyurethan-Vorpolymer mit folgenden Komponenten in Gewichtsprozenten:
- Toluol-diisozyanat und Dieethylen-glykol 55-35
- Polytrifluoroethylen 35-55
- Aluminiumbronze 5-10
wobei die Dispersität der Partikel der Aluminiumbronze nicht größer als 20µm (20 Mikron) ist.

## Revendications

1. Composition destinée à un revêtement anticorrosion résistant à la chaleur comprenant les composants suivants suivant leur rapport en pourcentage en poids :
du prépolymère de polyuréthane basé sur du toluène di-isocyanate et du diéthylèneglycol 55 à 35
du chloréthylène polytrifluorique 35 à 55
du bronze d'aluminium 5 à 10,
la dispersité des particules de bronze d'aluminium n'étant pas supérieure à 20 µm (20 micromètres).
